(19) Europäisches Patentamt
European Patent Office
Office européen des brevets

(11) EP 4 704 473 A1

(12) EUROPEAN PATENT APPLICATION
published in accordance with Art. 153(4) EPC

(43) Date of publication:
04.03.2026 Bulletin 2026/10

(51) International Patent Classification (IPC):
H04W 52/32 $^{(2009.01)}$   H04W 8/22 $^{(2009.01)}$
H04W 52/38 $^{(2009.01)}$   H04W 72/0457 $^{(2023.01)}$

(21) Application number: 24796986.8

(22) Date of filing: 23.04.2024

(52) Cooperative Patent Classification (CPC):
H04W 8/22; H04W 52/32; H04W 52/38;
H04W 72/0457

(86) International application number:
PCT/JP2024/015807

(87) International publication number:
WO 2024/225240 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023  JP 2023070552

(71) Applicant: NTT DOCOMO, INC.
Tokyo 100-6150 (JP)

(72) Inventors:
• SHIBAIKE, Naoya
  Tokyo 100-6150 (JP)
• NAGATA, Satoshi
  Tokyo 100-6150 (JP)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57)    A terminal according to one aspect of the present disclosure includes a transmitting section that transmits capability information, and a control section that, when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, performs the function.

| Priority | Transmission |
|---|---|
| High | Aperiodic SRS transmission, or PRACH transmission on a serving cell other than the PCell |
| Low | Semi-persistent and/or periodic SRS transmission on the PCell |

FIG. 3

EP 4 704 473 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), definition/change of priority for uplink transmission in power allocation to uplink transmission in two or more uplink carriers or two or more component carriers is under study.

However, unless priority of power distribution is appropriately recognized, communication quality degradation or throughput reduction may occur.

Thus, an object of the present disclosure is to provide a terminal, a radio communication method, and a base station that appropriately determine priority of power distribution for uplink transmission.

Solution to Problem

A terminal according to one aspect of the present disclosure includes a transmitting section that transmits capability information, and a control section that, when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, performs the function.

Advantageous Effects of Invention

According to one aspect of the present disclosure, it is possible to appropriately determine priority of power distribution for uplink transmission.

Brief Description of Drawings

[FIG. 1] FIG. 1 shows an example of a RACH configuration information element.
[FIG. 2] FIGS. 2A and 2B show examples of association between a PRACH occasion and a beam.
[FIG. 3] FIG. 3 shows an example of a new priority rule according to option 1-1 of Embodiment 1/2.
[FIG. 4] FIG. 4 shows an example of a new priority rule according to option 1-2 of Embodiment 1/2.
[FIG. 5] FIG. 5 is a diagram to show an example of a schematic structure of a radio communication system according to one embodiment.

[FIG. 6] FIG. 6 is a diagram to show an example of a structure of a base station according to one embodiment.

[FIG. 7] FIG. 7 is a diagram to show an example of a structure of a user terminal according to one embodiment.

[FIG. 8] FIG. 8 is a diagram to show an example of a hardware structure of the base station and the user terminal according to one embodiment.

[FIG. 9] FIG. 9 is a diagram to show an example of a vehicle according to one embodiment.

Description of Embodiments

(TCI, Spatial Relation, QCL)

For NR, it is studied to control reception processing (for example, at least one of reception, demapping, demodulation, or decoding) and transmission processing (for example, at least one of transmission, mapping, precoding, modulation, or coding) of at least one of a signal or a channel (expressed as a signal/channel) in a UE, based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

-    QCL type A (QCL-A): Doppler shift, Doppler spread, average delay, and delay spread
-    QCL type B (QCL-B): Doppler shift and Doppler spread
-    QCL type C (QCL-C): Doppler shift and average delay
-    QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), or an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), or a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

(Initial Access Procedure)

In an initial access procedure, the UE (RRC_IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when an ACK for Msg. 4 is transmitted from the UE by a base station (network), an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection (synchronization) of an OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB1) reception, and recognition of whether the UE can camp on the cell (carrier).

The SSB includes a band of 20 RBs and a time of 4 symbols. A transmission periodicity of the SSB is configurable from {5, 10, 20, 40, 80, 160} ms. In the half frame, a plurality of symbol locations of the SSB are defined based on a frequency range (FR1, FR2).

The PBCH includes a 56-bit payload. N repetitions of the PBCH are transmitted in a periodicity of 80 ms. N depends on the transmission periodicity of the SSB.

The system information consists of an MIB, RMSI (SIB1), and other system information (OSI) delivered by the PBCH. SIB1 includes a RACH configuration, and information for a RACH procedure. A time/frequency resource relationship between the SSB and a PDCCH monitoring resource for SIB1 is configured by the

PBCH.

The base station that uses beam correspondence transmits a plurality of SSBs by using a plurality of respective beams every SSB transmission periodicity. The plurality of SSBs include a plurality of respective SSB indices. The UE that has detected one SSB transmits a PRACH in a RACH occasion associated with the SSB index, and receives an RAR in an RAR window.

(Beam and Coverage)

In a high frequency band, unless beam forming is applied to a synchronization signal/reference signal, coverage becomes narrow, thereby making it difficult for the UE to identify the base station. On the other hand, applying the beam forming to the synchronization signal/reference signal to secure coverage allows a strong signal to be delivered in a specific direction, but makes it more difficult for signals to be delivered in directions other than the direction. Assuming that a direction of the presence of the UE is unknown in the base station before the UE is connected, transmission of the synchronization signal/reference signal using a beam only in an appropriate direction is unavailable. A method can be considered in which the base station transmits a plurality of synchronization signals/reference signals including respective beams in different directions, and recognizes which beam is identified by the UE. Using thin (narrow) beams for coverage requires transmission of many synchronization signals/reference signals, and thus overhead increases, and frequency use efficiency may be reduced.

Using thick (wide) beams to suppress overhead by reducing the number of beams (synchronization signals/reference signals) narrows coverage.

In future radio communication systems (for example, 6G), it can be considered that use of frequency bands, such as millimeter waves and terahertz waves, advances further. It can be considered that communication services are provided by constructing a cell area/coverage by using multiple thin beams.

Area expansion using existing FR2 and use of a higher frequency band than existing FR2 can be considered. For achieving these, improvement of beam management in addition to multi-TRP, reconfigurable intelligent surface (RIS), and the like is preferable.

PRACH coverage enhancement is under study. For example, multiple PRACH transmissions (plurality of repetitions of a PRACH) using the same beam in a 4-step RACH procedure and multiple PRACH transmissions using different beams in a 4-step RACH procedure are under study. This PRACH enhancement may be for frequency range (FR) 2 or may be applied to FR1. This PRACH enhancement may be applied to a short PRACH format or another format.

For multiple PRACH transmissions with the same beam, one RAR window for each PRACH transmission may be used. The RAR window may follow existing design. For multiple PRACH transmissions with the same beam, only one RAR window for all of the multiple PRACH transmissions may be used.

The UE may use a plurality of different transmit (Tx) beams to transmit a plurality of PRACHs over a plurality of ROs associated with the same SSB/CSI-RS.

(PRACH Configuration)

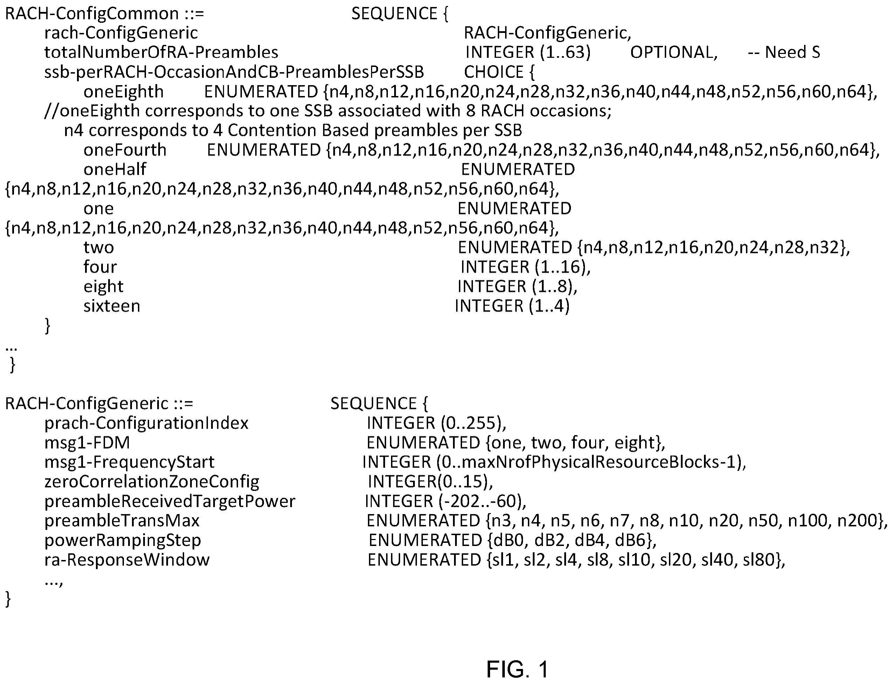

As shown in FIG. 1, a common RACH configuration (RACH-ConfigCommon) may include a generic RACH configuration (rach-ConfigGeneric), a total number of RA preambles (totalNumberOfRA-Preambles), and an SSB per RACH occasion and contention-based (CB) preambles per SSB (ssb-perRACH-OccasionAndCB-PreamblesPerSSB). rach-ConfigGeneric may include a PRACH configuration index (prach-ConfigurationIndex) and message 1 FDM (msg1-FDM, the number of PRACH occasions FDMed in one time instance). ssb-perRACH-OccasionAndCB-PreamblesPerSSB may include the number of CB preambles per SSB for the number 1/8 of SSBs per RACH occasion (oneEighth, one SSB being associated with 8 RACH occasions).

For a type 1 random access procedure (4-step random access procedure, message 1/2/3/4), the number N of SS/PBCH blocks associated with one PRACH occasion and the number R of CB preambles per valid PRACH occasion and per SS/PBCH block may be applied for the UE by ssb-perRACH-OccasionAndCB-PreamblesPerSSB.

For the type 1 random access procedure or for a type 2 random access procedure (2-step random access procedure, message A/B) with a PRACH occasion configuration independent of the type 1 random access procedure, if N < 1, one SS/PBCH block is mapped to 1/N consecutive valid RACH occasions, and R CB preambles with consecutive indices associated with an SS/PBCH block index for each valid PRACH occasion start at preamble index 0. If $N \geq 1$, R CB preambles with consecutive indices associated with SS/PBCH block index n ($0 \leq n \leq N-1$) for each valid PRACH occasion start at preamble index $n \cdot N\_preamble^{total}/N$. Here, $N\_preamble^{total}$ is given by totalNumberOfRA-Preambles for the type 1 random access procedure, and is given by msgA-TotalNumberOfRA-Preambles for the type 2 random access procedure with the PRACH occasion configuration independent of the type 1 random access procedure. $N\_preamble^{total}$ is a multiple of N.

An association period for mapping SS/PBCH blocks to PRACH occasions, the association period starting at frame 0, is a minimum value in a set determined by a PRACH configuration period in accordance with a relationship (relationship defined in a specification) between a PRACH configuration period and an association period (the number of PRACH configuration periods) so that $N_{Tx}^{SSB}$ SS/PBCH block indices are mapped to PRACH occasions at least one time in the association period. Here, the UE obtains $N_{Tx}^{SSB}$ from values of SSB positions in a burst (ssb-PositionsInBurst) in SIB1 or in common serving cell configuration (ServingCellConfigCommon). If a set of PRACH occasions or PRACH preambles not mapped to $N_{Tx}^{SSB}$ SS/PBCH block indices is present after an integer number of cycles of mapping from SS/PBCH block indices to PRACH occasions in the association period, none of the SS/PBCH block indices is mapped to the set of PRACH occasions or PRACH preambles. An association pattern period includes one or more association periods, and is determined so that a pattern between a PRACH occasion and an SS/PBCH block index repeats every 160 ms at most. If a PRACH occasion not associated with SS/PBCH block indices after an integer number of association periods is present, the PRACH occasion is not used for a PRACH.

In a case of PRACH transmission triggered by a higher layer (PRACH transmission not triggered by a PDCCH order), if ssb-ResourceList is provided, a PRACH mask index is indicated by ra-ssb-OccasionMaskIndex. This ra-ssb-OccasionMaskIndex indicates a PRACH occasion for PRACH transmission for which the PRACH occasion is associated with a selected SS/PBCH block index.

PRACH occasions are consecutively mapped to respective corresponding SS/PBCH block indices. Indexing of PRACH occasions indicated by mask index values is reset for each SS/PBCH block index and for each mapping cycle of consecutive PRACH occasions. In the first available mapping cycle, the UE selects, for the PRACH transmission, a PRACH occasion indicated by a PRACH mask index value for an indicated SS/PBCH block index.

For an indicated preamble index, the order of the PRACH occasions is as follows.

- Firstly, an increasing order of frequency resource indices for frequency multiplexed PRACH occasions,
- secondly, an increasing order of time resource indices for time multiplexed PRACH occasions in PRACH slots, and
- thirdly, an ascending order of PRACH slot indices.

If csirs-ResourceList is provided for PRACH transmission triggered in response to a request from the higher layer, a value of ra-OccasionList indicates a list of PRACH occasions for the PRACH transmission, and the PRACH occasions are associated with a selected CSI-RS index indicated by csi-RS. Indexing of PRACH occasions indicated by ra-OccasionList is reset for each association pattern period.

For PRACH configuration periods 10, 20, 40, 80, and 160 [msec], association periods are {1, 2, 4, 8, 16}, {1, 2, 4, 8}, {1, 2, 4}, {1, 2}, and {1}, respectively.

A value of the PRACH mask index value (msgA-SSB-SharedRO-MaskIndex) is associated with an allowed PRACH occasion (PRACH occasion index value) of an SSB.

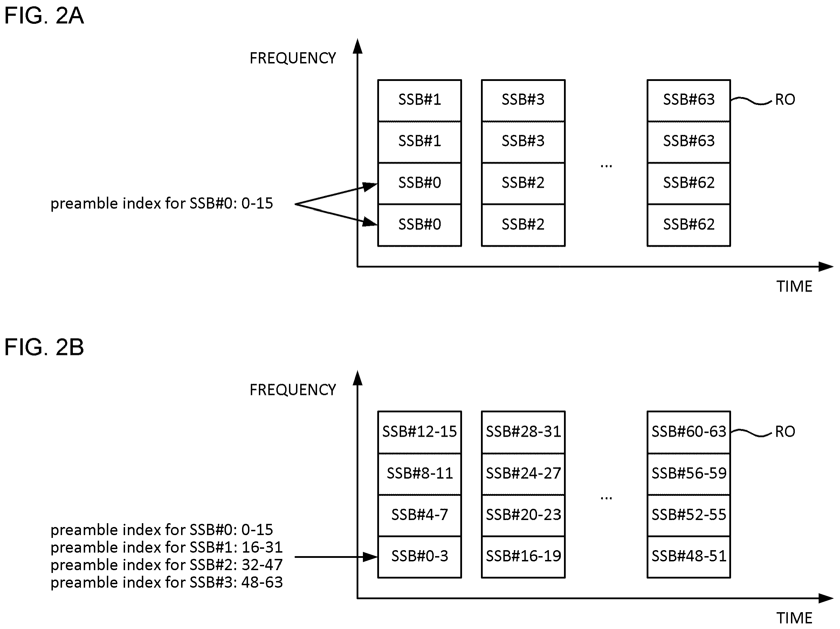

FIG. 2A shows an example of association (mapping 1) between a PRACH occasion (RACH occasion (RO)) and a beam (SSB/CSI-RS) based on a higher layer parameter "ssb-perRACH-OccasionAndCB-PreamblesPerSSB." When ssb-perRACH-OccasionAndCB-PreamblesPerSSB indicates oneHalf, n16 (N = 1/2, R = 16), and msg1-FDM is 4, four ROs are FDMed in one time instance, and one SSB is mapped to two ROs. Preamble indices 0 to 15 are associated with two ROs, and preamble indices 0 to 15 are associated with SSB0. Thus, when N < 1, one SSB is mapped to a plurality of ROs. This enables RO capacity per beam to be enhanced.

FIG. 2B shows another example of the association (mapping 2) between an RO and a beam based on the higher layer parameter "ssb-perRACH-OccasionAndCB-PreamblesPerSSB." When ssb-perRACH-OccasionAndCB-PreamblesPerSSB indicates n4, n16 (N = 4, R = 16), msg1-FDM is 4, and N_preamble^total is 64, four ROs are FDMed in one time instance, and four SSBs are mapped to one RO. One RO is associated with SSBs #0 to #3. Preamble indices #0 to #15 are associated with SSB #0, preamble indices #16 to #31 are associated with SSB #1, preamble indices #32 to #47 are associated with SSB #2, and preamble indices #48 to #63 are associated with SSB #3. In this manner, the same RO is associated with different SS/PBCH block indices, and different preambles use different SS/PBCH block indices. The base station can distinguish between associated SS/PBCH block indices by using a received PRACH.

The random access preamble can be transmitted only in a time resource defined by a random access configuration in a specification, and depends on whether the random access preamble is for FR1 or FR2, and a spectrum type (paired spectrum/supplementary uplink (SUL)/unpaired spectrum). The PRACH configuration index is given by a higher layer parameter "prach-ConfigurationIndex" or by "msgA-PRACH-ConfigurationIndex," if configured. In the specification, each value of the PRACH configuration index is associated with at least one of a preamble format, $x$ and $y$ in $n\_f$ (frame number) mod $x = y$, a subframe number, a start symbol, the number of PRACH slots in a subframe, the number $N\_t^{RA}$,slot of time-domain PRACH occasions in a PRACH slot, or PRACH duration $N\_dur^{RA}$.

Depending on whether PRACH repetition can be applied to a scenario, types of RACH procedure triggered by different purposes differ. The types of the RACH procedure may be at least one of the following.

- Contention-free random access (CFRA), PDCCH order RA (PDCCH ordered RA, RA initiated by PDCCH order), CFRA for beam failure recovery (BFR), CFRA for system information (SI) request, CFRA for reconfiguration with synchronization (reconfiguration with sync), and the like
- Contention-based random access (CBRA), RA triggered by MAC entity, RA triggered by RRC with event, CBRA for BFR, and the like
- 4-step RACH
- 2-step RACH

(PDCCH Order)

DCI format 1_0 includes a DCI format indicator field, a bit field always set to 1, and a frequency domain resource assignment field. When a cyclic redundancy check (CRC) with DCI format 1_0 is scrambled by a C-RNTI, and all frequency domain resource assignment fields are 1, this DCI format 1_0 is for a random access procedure initiated by a PDCCH order, and remaining fields are a random access preamble, a UL/supplementary Uplink (SUL) indicator, an SS/PBCH index (SSB index), a PRACH mask index, and a reserved bit (12 bits).

In a case of PRACH transmission triggered by the PDCCH order, when a value of a random access preamble index field is non-zero, a PRACH mask index field indicates a PRACH occasion for PRACH transmission for which a PRACH occasion is associated with an SS/PBCH block index indicated by an SS/PBCH block index field with the PDCCH order.

(Random Access Procedure in MAC Entity (MAC protocol specification/Random Access procedure initialization))

A random access procedure is initiated by RRC for an event following a PDCCH order, a MAC entity itself, or a specification. In the MAC entity, only one ongoing random access procedure is present at an any timing. A random access procedure for an SCell is initiated only by a PDCCH order with ra-PreambleIndex different from 0b000000.

When the random access procedure is initiated on a serving cell, the MAC entity performs the following.

- Configuring RA_TYPE as 4-stepRA when a random access procedure is initiated by a PDCCH order, and ra-PreambleIndex explicitly provided by a PDCCH is not 0b000000 or when a random access procedure is initiated for reconfiguration with synchronization, and a contention-free random access resource of a 4-step RA type is explicitly provided by rach-ConfigDedicated for a BWP selected for the random access procedure.

When selected RA_TYPE is configured as 4-stepRA, the MAC entity performs the following.

- Setting PREAMBLE_INDEX to notified ra-PreambleIndex and selecting an SSB notified by the PDCCH, when ra-PreambleIndex is explicitly provided from the PDCCH, and ra-PreambleIndex is not 0b000000, and
- determining, when the SSB is selected in such a manner as that described above, a subsequent available PRACH occasion among PRACH occasions corresponding to the selected SSB and allowed by a restriction given by ra-ssb-OccasionMaskIndex (The MAC entity randomly selects, with equal probability, a PRACH occasion from consecutive PRACH occasions corresponding to the selected SSB, in accordance with a specification. The MAC entity may, when determining the subsequent available PRACH occasion corresponding to the selected SSB, consider a possibility of occurrence of a measurement gap).

(Time Between PDCCH Order Reception and PRACH Transmission)

If a random access procedure has been initiated by a PDCCH order, the UE transmits, if requested by a higher layer, a PRACH in a selected PRACH occasion in a case where time between the last symbol for PDCCH order reception and the first symbol for PRACH transmission is $N\_(T, 2) + \Delta\_BWPSwitching + \Delta\_Delay + T\_switch$ [msec] or greater (time condition), as described in a specification. Here, $N\_(T, 2)$ is duration of an $N\_2$ symbol corresponding to PUSCH preparation time for UE processing capability 1. Assume that $\mu$ corresponds to minimum subcarrier spacing (SCS) configuration between SCS configuration for the PDCCH order and SCS configuration for PRACH transmission corresponding to the PDCCH order. $\Delta\_BWPSwitching = 0$ when an active UL BWP does not change, otherwise $\Delta\_BWPSwitching$ is defined in the specification. In FR1, $\Delta\_delay = 0.5$ msec, and in FR2, $\Delta\_delay = 0.25$ msec. T_switch is switching gap duration defined in the specification.

(SSB/CSI-RS selection: MAC protocol specification/Random Access Resource selection)

When an RA type (RA_TYPE) is set to 4-step RA (4-stepRA), the MAC entity performs the following operation:

- when an RA procedure has been initiated for SpCell beam failure recovery, a beam failure recovery timer (beamFailureRecoveryTimer) is running or is not configured, a CFRA resource for a beam failure recovery request associated with at least one of an SSB/CSI-RS is explicitly provided by RRC, and at least one of one or more SSBs with SS-RSRP exceeding an SS-RSRP threshold (rsrp-ThresholdSSB), among a plurality of SSBs in a candidate beam RS list (candidateBeamRSList), or one or more CSI-RSs with CSI-RSRP exceeding a CSI-RSRP threshold (rsrp-ThresholdCSI-RS), among a plurality of CSI-RSs in a candidate beam RS list (candidateBeamRSList), is available, the MAC entity performs the following operation.

      -- The MAC entity selects one SSB with SS-RSRP exceeding rsrp-ThresholdSSB, among the plurality of SSBs in candidateBeamRSList, or one CSI-RS with CSI-RSRP exceeding rsrp-ThresholdCSI-RS, among the plurality of CSI-RSs in candidateBeamRSList.
      -- If the CSI-RS is selected, and an RA preamble index (ra-PreambleIndex) associated with the selected CSI-RS is present, the MAC entity sets a preamble index (PREAMBLE_INDEX) to ra-PreambleIndex corresponding to an SSB QCLed (quasi-colocated) with the selected CSI-RS, among candidateBeamRSList.
      -- Otherwise, the MAC entity sets PREAMBLE_INDEX to ra-PreambleIndex corresponding to an SSB or a CSI-RS selected from an RA preamble set for the beam failure recovery request.

- Otherwise, when ra-PreambleIndex is explicitly provided by a PDCCH, and this ra-PreambleIndex is not 0b000000, the MAC entity sets PREAMBLE_INDEX to notified ra-PreambleIndex and selects an SSB notified by the PDCCH.
- Otherwise, when CFRA resources associated with a plurality of SSBs are explicitly provided in dedicated RACH configuration (rach-ConfigDedicated), and at least one SSB with SS-RSRP exceeding rsrp-ThresholdSSB is available, the MAC entity selects one SSB with SS-RSRP exceeding rsrp-ThresholdSSB, among the associated plurality of SSBs, and sets PREAMBLE_INDEX to ra-PreambleIndex corresponding to the selected SSB.
- Otherwise, when CFRA resources associated with a plurality of CSI-RSs are explicitly provided in dedicated RACH configuration (rach-ConfigDedicated), and at least one CSI-RS with CSI-RSRP exceeding rsrp-ThresholdCSI-RS, among the plurality of CSI-RSs, is available, the MAC entity selects one CSI-RS with CSI-RSRP exceeding rsrp-ThresholdCSI-RS, among the associated plurality of CSI-RSs, and sets PREAMBLE_INDEX to ra-PreambleIndex corresponding to the selected CSI-RS.
- Otherwise, when an RA procedure has been initiated for an SI request, and an RA resource for SI request is explicitly provided by RRC, the MAC entity performs the following operation.

      -- If at least one SSB with SS-RSRP exceeding rsrp-ThresholdSSB is available, the MAC entity selects one SSB with SS-RSRP exceeding rsrp-ThresholdSSB.

-- Otherwise, the MAC entity selects any SSB.
-- The MAC entity selects an RA preamble corresponding to the selected SSB from RA preambles validated in accordance with an RA preamble start index (ra-PreambleStartIndex), and sets PREAMBLE_INDEX to the selected RA preamble.

- Otherwise (CBRA preamble selection), the MAC entity performs the following operation.

-- If at least one SSB with SS-RSRP exceeding rsrp-ThresholdSSB is available, the MAC entity selects one SSB with SS-RSRP exceeding rsrp-ThresholdSSB.
-- Otherwise, the MAC entity selects any SSB.

(Condition for Validity/Invalidity of PRACH Occasion (Validity Condition))

In a paired spectrum (FDD) or an SUL band, all the PRACH occasions are valid. In an unpaired spectrum (TDD), the PRACH occasions may follow definition 1 and definition 2 below.

{Definition 1}

In a case where the UE is not provided with tdd-UL-DL-ConfigurationCommon, when a PRACH occasion in a PRACH slot starts at least N_gap symbols after the last SS/PBCH block reception symbol without preceding an SS/PBCH block in the PRACH slot, the PRACH occasion is valid. Here, N_gap is defined in a specification. When channelAccess-Mode=semistatic is provided, the PRACH occasion does not overlap a set of consecutive symbols before a start of a subsequent channel occupancy time in which the UE does not perform transmission. A candidate SS/PBCH block index of the SS/PBCH block corresponds to an SS/PBCH block index provided by ssb-PositionsInBurst in SIB1 or in Serving-CellConfigCommon.

{Definition 2}

When the UE is provided with tdd-UL-DL-ConfigurationCommon, the PRACH occasion in the PRACH slot is valid in the following case.

- The PRACH occasion is present in a UL symbol, or
- the PRACH occasion starts at least N_gap symbols after the last DL symbol and at least N_gap symbols after the last SS/PBCH block symbol without preceding an SS/PBCH block in a PRACH slot. Here, N_gap is defined in a specification. If channelAccessMode=semistatic is provided, as described in the specification, the PRACH occasion does not overlap a set of consecutive symbols before a start of a subsequent channel occupancy time in which any transmission is not allowed. As described in the specification, a candidate SS/PBCH block index of the SS/PBCH block corresponds to an SS/PBCH block index provided by ssb-PositionsInBurst in SIB1 or in ServingCellConfig-Common.

(PRACH Transmission Power Control (Physical layer procedures for control/Uplink Power control/Physical random access channel))

Actual PRACH transmission power is determined based on target preamble received power (target preamble reception power), an RS pathloss, and maximum output power limitation.
The UE determines (actual) transmission power $P_{PRACH,b,f,c}(i)$ for a PRACH on active UL BWP b on carrier f of serving cell c, based on a DL RS for serving cell c in transmission occasion i, as follows.

$$P_{PRACH,b,f,c}(i) = \min\{P_{CMAX,f,c}(i), P_{PRACH,target,f,c}+PL_{b,f,c}\} \ [dBm]$$

$P_{CMAX,f,c}(i)$ is maximum output power configured to the UE for carrier f of serving cell c in transmission occasion i. $P_{PRACH,target,f,c}$ is PRACH target received power "PREAMBLE_RECEIVED_TARGET_POWER" provided by a higher layer for active UL BWP b on carrier f of serving cell c. $PL_{b,f,c}$ is a pathloss for active UL BWP b on carrier f based on a DL RS associated with PRACH transmission on the active DL BWP of serving cell c, and is calculated by the UE as (reference signal power (referenceSignalPower, ss-PBCH-BlockPower) [dBm] - higher layer filtered RSRP [dBm]) [dB]. If the active DL BWP is an initial DL BWP, and is for multiplexing pattern 2 or 3 for an SS/PBCH block and a CORESET, the UE determines $PL_{b,f,c}$, based on an SS/PBCH block associated with the PRACH transmission.

The DL RS used for the pathloss calculation may be referred to as a pathloss (PL)-RS, a pathloss reference RS, or the like.

In an existing RACH process (procedure), if the UE transmits a PRACH, the UE does not receive a network RAR or Msg4 for contention resolution (conflict resolution) in a specific time window, and a random access process is not completed, the UE retransmits the PRACH after a random backoff time.

(Target Preamble Received Power (MAC protocol specification/MAC procedures/Random Access procedure))

The UE calculates transmission power, based on target preamble received power and a preamble power ramping counter (power ramping (lifting) structure) value configured from a network.

preambleReceivedTargetPower is initial random access preamble power for a 4-step RA type. DELTA_PREAMBLE is associated with a preamble format. PREAMBLE_POWER_RAMPING_COUNTER is the number of times of power ramping. PREAMBLE_POWER_RAMPING_STEP is a step (step size) of power ramping (power lifting).

For each RA preamble, the MAC entity performs the following:

- if a selected SSB or CSI-RS has not been changed since selection for RA preamble retransmission,

  -- increment PREAMBLE_POWER_RAMPING_COUNTER by 1,

- select a value of DELTA_PREAMBLE, and
- set PREAMBLE_RECEIVED_TARGET_POWER to preambleReceivedTargetPower + DELTA_PREAMBLE + (PREAMBLE_POWER_RAMPING_COUNTER - 1) $\times$ PREAMBLE_POWER_RAMPING_STEP + POWER_OFFSET_2STEP_RA.

In a case where a valid downlink assignment has been received on a PDCCH for an RA-RNTI, a received TB is successfully decoded, reception of an RAR is regarded as successful, and the RAR does not include MAC subPDU with only RAPID, the MAC entity applies the following operation to a serving cell in which an RAR preamble has been transmitted:

- process a received timing advance command,
- indicate, to a lower layer, preambleReceivedTargetPower and the amount of power ramping applied to the last RA preamble transmission (that is, PREAMBLE_POWER_RAMPING_COUNTER- - 1) $\times$ PREAMBLE_POWER_RAMPING_STEP)), and
- ignore a received UL grant if an RA procedure for an SCell has been performed on an uplink carrier without configured pusch-Config.

(RAR Window)

An RA response window (ra-ResponseWindow) is a time window for monitoring an RA response (RAR) (only for a special cell (SpCell)). An RA contention resolution timer (ra-ContentionResolutionTimer) is a timer for RA contention resolution (only for the SpCell). A Msg.B response window is a time window for monitoring an RA response (RAR) for a 2-step RA type (only for the SpCell).

When an RA preamble is transmitted, a MAC entity performs operations 1 to 3 below irrespective of a possibility of occurrence of a measurement gap.

{Operation 1}

If a contention-free RA preamble for BFR request is transmitted by the MAC entity, the MAC entity performs operations 1-1 and 1-2 below.

{{Operation 1-1}} The MAC entity starts, in the first PDCCH occasion since an end of the RA preamble transmission, ra-ResponseWindow configured in BFR configuration (BeamFailureRecoveryConfig).

{{Operation 1-2}} While ra-ResponseWindow is operating, the MAC entity monitors PDCCH transmission in a search space indicated by a BFR search space ID (recoverySearchSpaceId) of an SpCell identified by a C-RNTI.

{Operation 2}

Otherwise, the MAC entity performs operations 2-1 and 2-2 below.

{{Operation 2-1}} The MAC entity starts, in the first PDCCH occasion since an end of the RA preamble transmission, ra-ResponseWindow configured in common RACH configuration (RACH-ConfigCommon).

{{Operation 2-2}} While ra-ResponseWindow is operating, the MAC entity monitors PDCCH transmission in an RAR SpCell identified by an RA-RNTI.

{Operation 3}

If ra-ResponseWindow configured in BeamFailureRecoveryConfig has expired, and PDCCH transmission on the search space indicated by recoverySearchSpaceId for the C-RNTI has been received on a serving cell in which the preamble has been transmitted or if ra-ResponseWindow configured in RACH-ConfigCommon has expired, and an RAR including RA preamble identifiers matching a transmitted preamble index (PREAMBLE_INDEX) has been received, the MAC entity regards the RAR reception as unsuccessful, and increments a preamble transmission counter (PREAMBLE_TRANSMISSION_COUNTER) by 1.

The MAC entity may stop ra-ResponseWindow after success in receiving an RAR including RA preamble identifiers matching the transmitted PREAMBLE_INDEX (may stop monitoring for the RAR).

For PDCCH monitoring in the RA response window, there are two cases of a PDCCH for a base station response to BFR and a PDCCH for an RAR. The following description may be applied to both of the cases.

When an MSGA (Msg.A) preamble is transmitted, a MAC entity performs operations 4 to 6 below irrespective of a possibility of occurrence of a measurement gap.

{Operation 4}

The MAC entity starts, in a PDCCH monitoring window defined in a specification, a Msg.B response window (msgB-ResponseWindow).

msgB-ResponseWindow may be started in the first symbol for the earliest CORESET in which the UE is configured to receive a PDCCH for a type 1-PDCCH CSS set that is at least one symbol after the last symbol of a PRACH occasion corresponding to PRACH transmission. A length of msgB-ResponseWindow may correspond to SCS for the type 1-PDCCH CSS set.

{Operation 5}

While msgB-ResponseWindow is operating, the MAC entity monitors PDCCH transmission in an RAR SpCell identified by an MSGB-RNTI.

{Operation 6}

If the MSGA includes a C-RNTI MAC CE, while msgB-ResponseWindow is operating, the MAC entity monitors PDCCH transmission in an RAR SpCell identified by a C-RNTI.

(RA-RNTI (MAC protocol specification/Random Access Preamble transmission))

The RA-RNTI associated with a PRACH occasion in which an RA preamble is transmitted is calculated as follows.

RA-RNTI = 1 + s_id + 14 × t_id + 14 × 80 × f_id + 14 × 80 × 8 × ul_carrier_id

Here, s_id is an index of the first OFDM symbol of the PRACH occasion ($0 \leq$ s_id < 14 (the number of symbols in a slot)). t_id is an index of the first slot of the PRACH occasion in a system frame ($0 \leq$ t_id < 80 (the number of slots in a system frame in a case of 120 kHz SCS)). Subcarrier spacing (SCS) for determination of t_id is based on a value of $\mu$. f_id is an index of the PRACH occasion in the frequency domain ($0 \leq$ f_id < 8 (a maximum number of FDMed PRACH occasions)). ul_carrier_id is a UL carrier used for the RA preamble transmission (0 for a normal uplink (NUL) carrier, 1 for a supplementary uplink (SUL) carrier). The RA-RNTI is calculated in accordance with a specification. The RA-RNTI is an RNTI for 4-step RACH.

The MSGB-RNTI associated with a PRACH occasion in which an RA preamble is transmitted is calculated as follows.

MSGB-RNTI = 1 + s_id + 14 × t_id + 14 × 80 × f_id + 14 × 80 × 8 × ul_carrier_id + 14 × 80 × 8 × 2

Here, s_id is an index of the first OFDM symbol of the PRACH occasion ($0 \leq$ s_id < 14). t_id is an index of the first slot of the PRACH occasion in a system frame ($0 \leq$ t_id < 80). Subcarrier spacing (SCS) for determination of t_id is based on a value of $\mu$. f_id is an index of the PRACH occasion in the frequency domain ($0 \leq$ f_id < 8). ul_carrier_id is a UL carrier used for the RA preamble transmission (0 for a normal uplink (NUL) carrier, 1 for a supplementary uplink (SUL) carrier). The MSGB-RNTI is an RNTI for 2-step RACH.

A total number of values of the RA-RNTI (total number of PRACH occasions in system frames) is $14\times80\times8\times2$. The equation for the MSGB-RNTI adds the total number of values of the RA-RNTI to the equation for the RA-RNTI. With this equation, a collision between the MSGB-RNTI and the RA-RNTI can be avoided.

(RAR Monitoring)

In response to PRACH transmission, the UE attempts to detect, in a window controlled by the above-described higher layer, DCI format 1_0 with a CRC scrambled by a corresponding RA-RNTI. The window starts in the first symbol for the earliest CORESET in which the UE is configured to receive a PDCCH for a type 1-PDCCH CSS set, that is, at least 1 symbol after the last symbol for a PRACH occasion corresponding to the PRACH transmission. The symbol period corresponds to SCS for the type 1-PDCCH CSS set. A length of the window is provided as the number of slots by ra-responseWindow, based on the SCS for the type 1-PDCCH CSS set.

If the UE has detected this DCI format 1_0 with the CRC scrambled by the corresponding RA-RNTI and the same least significant bits (LSBs) of an SFN field in the DCI format as LSBs of a system frame number (SFN) in which the UE has transmitted a PRACH, and the UE has received a transport block in a corresponding PDSCH, the UE may assume the same DMRS antenna port QCL properties in relation to an SS/PBCH block or a CSI-RS resource used by the UE for association of the PRACH, irrespective of whether the UE is provided with a TCI state (TCI-State) for a CORESET for receiving a PDCCH with this DCI format 1_0.

If the UE attempts to detect DCI format 1_0 with a CRC scrambled by a corresponding RA-RNTI, in response to PRACH transmission initiated by a PDCCH order for triggering a CFRA procedure for an SpCell, the UE may assume that a PDCCH including this DCI format 1_0 and the PDCCH order have the same DMRS antenna port QCL properties. If the UE attempts to detect DCI format 1_0 with a CRC scrambled by a corresponding RA-RNTI, in response to PRACH transmission initiated by a PDCCH order for triggering a CFRA procedure for a secondary cell, the UE may assume DMRS antenna port QCL properties of a CORESET associated with a type 1-PDCCH CSS set for reception of a PDCCH including this DCI format 1_0.

The RAR UL grant may include at least one of a frequency hopping flag field, a PUSCH frequency resource allocation field, a PUSCH time resource allocation field, a modulation and coding scheme (MCS) field, a TPC command field for PUSCH, a CSI request field, or a channel access-cyclic prefix extension (CPext) field.

In single-cell operation or operation with carrier aggregation in the same frequency band, if qcl-Type set to 'typeD' properties of a DMRS for monitoring of a PDCCH in a type 1-PDCCH CSS set is not configured to be the same as qcl-Type set to 'typeD' properties of a DMRS for monitoring of a PDCCH in a type 0/0A/0B/2/3-PDCCH CSS set or in a USS set, and the PDCCH or associated PDSCH overlaps, in at least 1 symbol, a PDCCH monitored by the UE in the type 1-PDCCH CSS set or an associated PDSCH, the UE does not assume that a PDCCH in the type 0/0A/0B/2/3-PDCCH CSS set or in the USS set is monitored.

If PDCCH-Config provides the UE with one or more search space sets with corresponding one or more of searchSpaceZero, searchSpaceSIB1, searchSpaceOtherSystemInformation, pagingSearchSpace, peiSearchSpace, ra-SearchSpace, and a CSS set, and provides the UE with an SI-RNTI, a P-RNTI, a PEI-RNTI, an RA-RNTI, a MsgB-RNTI, an SFI-RNTI, an INT-RNTI, a TPC-PUSCH-RNTI, a TPC-PUCCH-RNTI, or a TPC-SRS-RNTI, the UE does not assume, for an RNTI of any one of these RNTIs, that information from more than one DCI format with a CRC scrambled by using the RNTI is processed per slot.

(Msg3 PUSCH)

The UE transmits a transport block in a PUSCH scheduled by an RAR UL grant in a corresponding RAR message. The UE transmits the PUSCH in slot $n+k_2+\Delta+2^{\mu}\cdot K_{cell,offset}$. $K_{cell,offset}$ in is provided by CellSpecific_Koffset, and, if not provided, $K_{cell,offset} = 0$.

$k_2$ is a slot offset, and is determined based on a row index m+1 of an allocation table provided by a PUSCH time resource allocation field value m of the RAR UL grant, and PUSCH subcarrier spacing $\mu$PUSCH. $\Delta$ is an additional subcarrier spacing-specific slot delay time value for the first transmission of a PUSCH scheduled by an RAR, is specific to the PUSCH subcarrier spacing $\mu$PUSCH, and is applied in addition to $K_2$.

If the UE requests repetition for the PUSCH transmission, the UE transmits the PUSCH over $N_{puscH}^{repeat}$ slots. Here, $N_{puscH}^{repeat}$ is indicated by the 2 MSB of an MCS field in the RAR UL grant or DCI format 0_0, from among a set of four values provided by numberOfMsg3Repetitions or {1, 2, 3, 4} in a case where numberOfMsg3Repetitions is not provided.

The UE determines whether to apply Msg3 repetition, based on RSRP. When Msg repetition is configured, and RSRP of a DL pathloss reference is less than rsrp-ThresholdMsg3 (threshold), a MAC entity assumes that Msg3 repetition is applicable to a current random access (RA) procedure.

The UE can request Msg3 PUSCH repetition via a dedicated PRACH resource. The MAC entity selects RA resources in a case where one or more sets of available RA resources are present and where one of the one or more sets is used to indicate all the features for triggering this RA procedure and a case where one or more sets of available RA resources are present in which indication for a subset of all the features for triggering this RA procedure is configured. In a case where Msg3 repetition indication is configured for an RA resource set, when Msg3 repetition is unavailable, the MAC entity regards the RA resource set as unavailable for a RACH procedure.

An RA resource may be partitioned for each feature. The features may include at least one of Msg3 repetition, reduced capacity (RedCap), small data transmission (SDT), or RAN slicing.

In SIB1 transmitted by the base station, the following is notified.

- Priority of each feature (featurePriorities-r17) This priority is used to determine which FeatureCombinationPreambles are to be used by the UE when a certain feature is mapped to more than one FeatureCombinationPreambles (feature combination preamble configuration).
- Additional RO configuration The configuration includes an available feature (which may be associated with a plurality of features), an RA resource (for example, a preamble index), and a mask index for distinguishing an RO.

The UE determines, depending on the feature, an RO to be used.

SIB1 includes ServingCellConfigCommonSIB. It includes UplinkConfigCommonSIB. It includes BWP-Uplink-Common (UL BWP common configuration).

BWP-UplinkCommon may include a RACH common configuration (RACH-ConfigCommon or MsgA-Config-Common) and additionalRACH-ConfigList-r17 (additional RACH configuration list). additionalRACH-ConfigList-r17 may include rsrp-ThresholdMsg3-r17 (threshold).

The RACH common configuration may include FeatureCombinationPreambles. FeatureCombinationPreambles associates one set (partition) of preambles with one feature combination. FeatureCombinationPreambles may include FeatureCombination (feature combination configuration), startPreambleForThisPartition (index of first preamble), numberOfPreamblesPerSSB-ForThisPartition (number of preambles), and ssb-SharedRO-MaskIndex-r17 (PRACH mask index). FeatureCombination includes at least one of redCap (RedCap), smallData (SDT), sliceGroup (RAN slicing), or msg3-Repetition (Msg3 repetition). The partition is given by the index of the first preamble and the number of preambles.

The PRACH mask index explicitly configures an available RO. At least one of PRACH occasion indices 1 to 8 can be configured by using a relationship between the PRACH mask index and an allowed PRACH occasion (RO) of an SSB (MAC protocol specification/table of PRACH mask index values).

The number of Msg3 repetitions is indicated by the 2 most significant bits (MSBs) (higher 2 bits) of a modulation and coding scheme (MCS) field in an RAR UL grant.

In a case where a PUSCH scheduled by an RAR UL grant is transmitted in PUSCH repetition type A, the 2 MSBs of the MCS information field in the RAR UL grant provides a codepoint for determination of the number K of repetitions, in accordance with a relationship (table) between a value (codepoint) of the 2 MSBs of the MCS information field and the number K of repetitions, based on whether a higher layer parameter "numberOfMsg3Repetitions" is configured. The number N of slots used to determine a transport block size (TBS) is equal to 1.

In a case where a PUSCH scheduled by DCI format 0_0 with a CRC scrambled by a TC-RNTI is transmitted in PUSCH repetition type B, the 2 MSBs of the MCS information field in the DCI format provides a codepoint for determination of the number K of repetitions, in accordance with a relationship (table) between a value (codepoint) of the 2 MSBs of the MCS information field and the number K of repetitions, based on whether a higher layer parameter "numberOfMsg3Repetitions" is configured. The number N of slots used to determine a TBS is equal to 1.

(Contention Resolution)

When a Msg3 is transmitted, the MAC entity follows operation 1 to operation 4 below.

{Operation 1} If the Msg3 is transmitted on a non-terrestrial network, the MAC entity starts ra-ContentionResolutionTimer, and resumes the timer in each HARQ retransmission in the first symbol after a timing obtained by adding a UE estimation of UE-gNB RTT to an end of the Msg3.

{Operation 2} Instead, if the Msg3 transmission (initial transmission or HARQ retransmission) is scheduled with type A PUSCH repetition, the MAC entity starts or resumes ra-ContentionResolutionTimer in the first symbol after an end of all repetitions of the Msg3 transmission.

{Operation 3} Otherwise, the MAC entity starts or resumes ra-ContentionResolutionTimer in the first symbol after an end of the Msg3 transmission.

{Operation 4} The MAC entity monitors a PDCCH while ra-ContentionResolutionTimer is running, irrespective of a possibility of occurrence of a measurement gap.

Step 4 (Msg4) in an RA procedure of Rel-16 NR follows step 4 operation below.

{Step 4 Operation}

When the UE is not provided with a C-RNTI, the UE attempts to detect DCI format 1_0 with a CRC scrambled by a corresponding TCI-RNTI and for scheduling a PDCSH including a UE contention resolution identity, in response to PUSCH transmission scheduled by an RAR UL grant. In response to receiving the PDSCH including the UE contention resolution identity, the UE transmits HARQ-ACK information in a PUCCH. The PUCCH transmission is performed in the same active UL BWP as that for the PUSCH transmission. Minimum time between the last symbol for the PDSCH reception and the first symbol for the corresponding PUCCH transmission including the HARQ-ACK information is equal to $N\_T,1$ [msec]. $N\_T,1$ is duration of $N\_T,1$ symbols corresponding to PDSCH processing time for UE processing capability 1 in a case where an additional PDSCH DM-RS is configured. For $\mu=0$, the UE assumes that $N\_T,1 = 14$.

When detecting a DCI format in response to PUSCH transmission scheduled by an RAR UL grant or in response to corresponding PUSCH retransmission scheduled by DCI format 0_0 with a CRC scrambled by a TC-RNTI provided by a corresponding RAR message, the UE may assume, for a PDCCH that delivers the DCI format, the same DM-RS antenna port quasi co-location (QCL) properties as DM-RS antenna port QCL properties for an SS/PBCH block used by the UE for PRACH association, irrespective of whether the UE is provided with a TCI state for a CORESET with which the UE has received the PDCCH with the DCI format.

(Type 2 RA Procedure)

In MsgA transmission in a type 2 RA procedure (2-step RA procedure), the UE transmits a pair of the following:

- one preamble with one preamble index in MsgA RACH occasion (RO)
- one PUSCH with one PUSCH resource unit (PRU) in MsgA PUSCH occasion (PO) per MsgA PUSCH configuration

A MsgA PRACH has a structure of a MsgA preamble index (code domain resource) in a MsgA RACH occasion (time/frequency domain resource).

A MsgA PUSCH has a structure of a MsgA PUSCH resource unit (code/spatial domain resource) in a MsgA PUSCH occasion (time/frequency domain resource) in a MsgA PUSCH configuration (RRC configuration).

In the MsgA PUSCH occasion (time/frequency domain resource), a plurality of PRUs can be multiplexed by using a DMRS port/sequence. In only CP-OFDM, more than one DMRS sequence can be configured.

(MsgA PUSCH Occasion in Type 2 RA Procedure)

A MsgA PUSCH occasion (PO) overlapping a valid RO for a type 1/2 RA procedure is an invalid PO.

When a PUSCH occasion does not overlap, in time and frequency, any valid PRACH occasion associated with the type 1 RA procedure or the type 2 RA procedure, the PUSCH occasion is valid. For an unpaired spectrum (TDD) and an SS/PBCH block with an index provided by ssb-PositionsInBurst in SIB1 or by ServingCellConfigCommon, the UE follows some operations below.

- If the UE is not provided with tdd-UL-DL-ConfigurationCommon, and a PUSCH occasion satisfies the following condition, the PUSCH occasion is valid.

    -- the PUSCH occasion precedes an SS/PBCH block in a PUSCH slot therefor, and

    -- if the PUSCH occasion starts at least $N_{gap}$ symbols after the last SS/PBCH block symbol, and channelAccessMode="semiStatic" is provided, the PUSCH occasion does not overlap a set of consecutive symbols before a start of a subsequent channel occupancy time in which the UE does not perform transmission. Here, $N_{gap}$ is provided in a table of a specification.

- If the UE is provided with tdd-UL-DL-ConfigurationCommon, and a PUSCH occasion satisfies the following condition, the PUSCH occasion is valid.

    -- The PUSCH occasion is present in a UL symbol. Alternatively,

-- the PUSCH occasion precedes an SS/PBCH block in a PUSCH slot therefor, and
-- if the PUSCH occasion starts at least $N_{gap}$ symbols after the last DL symbol and at least $N_{gap}$ symbols after the last SS/PBCH block symbol, and channelAccessMode="semiStatic" is provided, the PUSCH occasion does not overlap a set of consecutive symbols before a start of a subsequent channel occupancy time in which the UE does not perform transmission. Here, $N_{gap}$ is provided in a table of a specification.

(PRACH Collision/Physical layer procedures for control/Slot configuration))

In operation on a single carrier in an unpaired spectrum (TDD), if the UE is configured with SRS, PUCCH, PUSCH, or PRACH transmission in a symbol set of one slot, by a higher layer, and the UE detects, in a symbol subset of the symbol set, a DCI format for indicating CSI-RS or PDSCH reception to the UE, the UE follows the following operation:

- If the UE does not indicate a capability for partial cancellation (partialCancellation), the UE follows the following operation:

-- when the first symbol in the symbol set occurs within a period of $T_{proc,2}$ after the last symbol for a CORESET in which the UE detects the DCI format, the UE does not expect to cancel PUCCH, PUSCH, or PRACH transmission in the symbol set. Otherwise, the UE cancels a PUCCH, a PUSCH, actual repetition of a PUSCH, or PRACH transmission in the symbol set.

- If the UE indicates the capability for partial cancellation (partialCancellation), the UE follows the following operation:

-- the UE does not expect to cancel PUCCH, PUSCH, or PRACH transmission in a symbol of the symbol set in which the first symbol in the symbol set occurs within a period of $T_{proc,2}$ after the last symbol for a CORESET in which the UE detects the DCI format. The UE cancels a PUCCH, a PUSCH, actual repetition of a PUSCH, or PRACH transmission in remaining symbol(s) of the symbol set.

In other words, when a PRACH triggered/configured by the higher layer overlaps a symbol scheduled for DL reception by DCI, the UE cancels the PRACH.

In operation on a single carrier in an unpaired spectrum (TDD), when, in a symbol set of one slot for which reception of a specific SS/PBCH block is indicated to the UE, transmission overlaps any symbol of the symbol set, the UE does not transmit a PUSCH, a PUCCH, and a PRACH in the slot and does not transmit an SRS in the symbol set of the slot. The specific SS/PBCH block is an SS/PBCH block with ssb-PositionsInBurst in SIB1 (SystemInformationBlockType1), with ssb-PositionsInBurst in ServingCellConfigCommon, with ssb-PositionsInBurst in SSB-MTCAdditionalPCI associated with a physical cell ID with an active TCI state for PDCCH or PDSCH in a case where the UE is not provided with dl-OrJoint-TCIStateList, or for a symbol set of a slot corresponding to an SS/PBCH block configured for L1 beam measurement/reporting. When the UE is provided with tdd-UL-DL-ConfigurationCommon or tdd-UL-DL-Configuration-Dedicated, it is not expected that the symbol set of the slot is indicated with uplink by this tdd-UL-DL-ConfigurationCommon or tdd-UL-DL-ConfigurationDedicated.

If the UE

- is configured with a plurality of serving cells, is provided with directionalCollisionHandling-r16 = 'enabled' for a set of serving cells among the plurality of serving cells,
- indicates support of a capability for half-DuplexTDD-CA-SameSCS-r16, and
- is not configured to monitor a PDCCH for detection of DCI format 2_0 on any of the plurality of serving cells, the UE follows the following operation:
When, in a symbol set of a slot for which reception of a specific SS/PBCH block in the first cell among the plurality of serving cells is indicated to the UE, transmission overlaps any symbol of the symbol set, the UE does not transmit a PUSCH, a PUCCH, and a PRACH in the slot and does not transmit an SRS in the symbol set of the slot in a specific cell. The specific SS/PBCH block is an SS/PBCH block with ssb-PositionsInBurst in SIB1 (SystemInformationBlock-Type1), with ssb-PositionsInBurst in ServingCellConfigCommon, with ssb-PositionsInBurst in SSB-MTCAdditionalPCI associated with a physical cell ID with an active TCI state for PDCCH or PDSCH in a case where the UE is not provided with dl-OrJoint-TCIStateList, or for a symbol set of a slot corresponding to an SS/PBCH block configured for L1 beam measurement/reporting. The specific cell is any one of the plurality of serving cells without a capability for simultaneous transmission/reception indicated by simultaneousRxTxInterBandCA in the plurality of serving cells, and is any one of cells corresponding to the same band as that of the first cell, irrespective of the capability indicated by simultaneousRxTxInterBandCA.

In other words, when a PRACH triggered/configured by the higher layer overlaps an SSB symbol, the UE does not transmit the PRACH.

(PRACH Collision (Physical layer procedures for control/UE procedure for determining slot format))

In a symbol set of a slot in a case where tdd-UL-DL-ConfigurationCommon and tdd-UL-DL-ConfigurationDedicated are provided, the symbol set being indicated as flexible to the UE by this tdd-UL-DL-ConfigurationCommon and tdd-UL-DL-ConfigurationDedicated, in a case where tdd-UL-DL-ConfigurationCommon and tdd-UL-DL-ConfigurationDedicated are not provided, or in a case where the UE detects DCI format 2_0 providing the slot with a format using a slot format value other than 255, the UE follows the following operation:

- in a case where an SFI index field value in DCI format 2_0 indicates m the symbol set of the slot as flexible, and the UE does not receive a DCI format indicating PDSCH or CSI-RS reception to the UE or does not receive, in the symbol set of the slot, a DCI format, an RAR UL grant, a fallback RAR (fallbackRAR) UL grant, or a success RAR (successRAR) indicating PUSCH, PUCCH, PRACH, or SRS transmission to the UE, the UE performs neither transmission nor reception in the symbol set of the slot.

In other words, when a PRACH without a PDCCH order overlaps a symbol indicated as flexible by an SFI, the UE does not transmit the PRACH.

If the UE is configured with SRS, PUCCH, PUSCH, or PRACH transmission in a symbol set of a slot, by a higher layer, and the UE detects DCI format 2_0 with a slot format value other than 255 and indicating, as downlink or flexible, a slot format with a symbol subset of the symbol set or receives a DCI format indicating, to the UE, CSI-RS or PDSCH reception in a symbol subset of the symbol set, the UE follows the following operation:

- If the UE does not indicate a capability for partial cancellation (partialCancellation), the UE follows the following operation:

  -- when the first symbol in the symbol set occurs within a period of $T_{proc,2}$ after the last symbol for a CORESET in which the UE detects the DCI format, the UE does not expect to cancel PUCCH, PUSCH, or PRACH transmission in the symbol set. Otherwise, the UE cancels a PUCCH, a PUSCH, actual repetition of a PUSCH, or PRACH transmission in the symbol set.
  - If the UE indicates the capability for partial cancellation (partialCancellation), the UE follows the following operation:

- - the UE does not expect to cancel PUCCH, PUSCH, or PRACH transmission in a symbol of the symbol set in which the first symbol in the symbol set occurs within a period of $T_{proc,2}$ after the last symbol for a CORESET in which the UE detects the DCI format. The UE cancels a PUCCH, a PUSCH, actual repetition of a PUSCH, or PRACH transmission in remaining symbol(s) of the symbol set.

In other words, when a PRACH configured by the higher layer overlaps a symbol indicated as DL or flexible by an SFI, the UE cancels the PRACH.

In a symbol set of a slot in a case where tdd-UL-DL-ConfigurationCommon and tdd-UL-DL-ConfigurationDedicated are provided, the symbol set being indicated as flexible to the UE by this tdd-UL-DL-ConfigurationCommon and tdd-UL-DL-ConfigurationDedicated, or in a case where tdd-UL-DL-ConfigurationCommon and tdd-UL-DL-ConfigurationDedicated are not provided, when the UE has not detected DCI format 2_0 providing a slot format for the slot, the UE follows the following operation:

- If the UE is configured with SRS, PUCCH, PUSCH, or PRACH transmission, by a higher layer, and the UE is not provided with enableConfiguredUL, the UE follows the following operation:

  -- If the UE does not indicate a capability for partial cancellation (partialCancellation), the UE follows the following operation:

  --- If the first symbol for a PUCCH, a PUSCH, actual repetition of a PUSCH, or a PRACH occurs within a period of $T_{proc,2}$ after the last symbol for a CORESET in which the UE is configured to monitor a PDCCH for DCI format 2_0, the UE does not expect to cancel transmission of a PUCCH, a PUSCH, actual repetition of a PUSCH, or a PRACH in the slot. Otherwise, the UE cancels a PUCCH, a PUSCH, actual repetition of a PUSCH, or PRACH transmission in the slot.

-- If the UE indicates the capability for partial cancellation (partialCancellation), the UE follows the following operation:

--- The UE does not expect to cancel transmission of a PUCCH, a PUSCH, actual repetition of a PUSCH, or a PRACH in a symbol of the symbol set in which the first symbol occurs within a period of $T_{proc,2}$ after the last symbol for a CORESET in which the UE is configured to monitor a PDCCH for DCI format 2_0. The UE cancels a PUCCH, a PUSCH, actual repetition of a PUSCH, or PRACH transmission in the slot. The UE cancels a PUCCH, a PUSCH, actual repetition of a PUSCH, or PRACH transmission in remaining symbol(s) of the symbol set.

In other words, when a PRACH triggered/configured by the higher layer overlaps a flexible symbol configured as semi-static, and the UE has not detected DCI format 2_0, the UE cancels the

PRACH.

(PRACH Resource for Multiple PRACH Transmissions)

It is studied that multiple PRACH transmissions are transmitted on ROs (separate ROs) separated from a single PRACH transmission and that multi PRACH transmissions are transmitted on ROs shared with a single PRACH transmission (shared ROs) by using preambles separated from a single PRACH transmission (separate preambles).
It is studied to support transmission of multiple PRACH transmissions on separate ROs to distinguish multiple PRACH transmissions using the same Tx beam from a single PRACH transmission.
It is studied to support transmission of multiple PRACH transmissions using separate preambles on shared ROs to distinguish multiple PRACH transmissions using the same Tx beam from a single PRACH transmission.
In multiple PRACH transmissions using the same Tx beam, an "RO group" is assumed for at least one of separate preambles on shared ROs or multiple PRACH transmissions on separate ROs.

- All the ROs in one RO group are associated with one or more same SSBs.
- Shared ROs/preambles mean that ROs/preambles are shared with a single PRACH transmission.
- Separate ROs/preambles mean that ROs/preambles are separated from a single PRACH transmission.
- A valid RO is defined in an existing specification. The valid RO may follow the validity condition for PRACH occasion described above.

(RAR Monitoring for Multiple PRACHs)

For multiple PRACH transmissions using the same transmit beam, it is studied to support only a single RAR window in RAR monitoring for multiple PRACH transmissions in one RACH attempt.
The UE performs repetition transmission of a Msg1 on K random access occasions (ROs)/RO resources. Subsequently, the UE waits for detection of a Msg2 in a configured type 1 PDCCH occasion. In the present disclosure, repetition transmission of a preamble in K ROs/RO resources is sometimes referred to as an RO group. For example, an RO group size (the number of ROs in an RO group) is K. One RAR window is started after one RO group.
In the present disclosure, the RO group may be defined to consist of K TDMed valid ROs and to include a single RO in a frequency domain and a time domain. In other words, selecting the RO group determines an RO for each PRACH transmission. For example, when the number K of repetitions = 2, the RO group consists of two TDMed consecutive ROs.

(Prioritization for Transmission Power Reduction (Physical layer procedures for control (Rel. 16)/Uplink Power control: Prioritizations for transmission power reductions)

In the present disclosure, notation of P with ^ thereabove and P^ may be interchangeably interpreted.
In single cell operation with two UL carriers or in operation with carrier aggregation, when a total UE transmission power for transmission of PUSCH, PUCCH, PRACH, or SRS on a serving cell of a given frequency range within respective transmission occasions i may exceed $P^{\wedge}_{CMAX}(i)$, the UE assigns power to transmissions of PUSCH/PUCCH/PRACH/SRS according to the following priority order (descending order, order from highest priority) such that the total UE transmit power for transmission on the serving cell within the frequency range is less than or equal to $P^{\wedge}_{CMAX}(i)$ for the frequency range within all symbols of transmission occasion i: Here, $P^{\wedge}_{CMAX}(i)$ is a linear value of $P_{CMAX}(i)$ [dB] within a transmission occasion i. When determining the total transmission power for the serving cell within the frequency range within a symbol of transmission occasion i, the UE does not include the power for a transmission starting after the symbol of transmission occasion i.

The total UE transmission power in a symbol of a slot is defined as the sum of the linear values of UE transmission power for PUSCH, PUCCH, PRACH, and SRS in the symbol of the slot.

The priority order is as follows.

- PRACH transmission on PCell.
- According to a UE procedure for reporting control information, transmission of PUCCH or PUSCH with a higher priority index.
- Transmission of PUCCH or PUSCH with the same priority index.

  -- PUCCH transmission with HARQ-ACK information/SR/link recovery request (LRR) or PUSCH transmission with HARQ-ACK information.
  -- PUCCH transmission with CSI or PUSCH transmission with CSI.
  -- PUSCH transmission without HARQ-ACK information or CSI and PUSCH transmission on PCell in a type-2 RA procedure.

- SRS transmission with aperiodic SRS having a higher priority than semi-persistent/periodic SRS, or PRACH transmission on a serving cell other than a PCell.

In the same priority case, in operation with carrier aggregation, the UE prioritizes power allocation for a transmission on a primary cell of a master cell group (MCG) or a secondary cell group (SCG) over a transmission on a secondary cell. In the same priority case, in operation with two UL carriers, the UE prioritizes the power allocation corresponding to a transmission on a carrier on which a PUCCH transmission is configured for the UE. If no PUCCH is configured for either of the two UL carriers, the UE prioritizes power allocation for a transmission on a non-SUL carrier.

(Priority Index for PUSCH or PUCCH (Physical layer procedures for control/UE procedure for reporting control information)

Transmission of a PUSCH or a PUCCH with repetition, if any, other than a PUCCH with sidelink (SL) HARQ-ACK report may have priority index 0 or priority index 1. In a configured grant PUSCH transmission, when the UE is provided with phy-PriorityIndex, the UE determines the priority index from the parameter. In a semi-persistent (SPS) PDSCH reception or a PUCCH transmission with HARQ-ACK information corresponding to an SPS PDSCH release, when the UE is provided with harq-CodebookID, the UE determines the priority index from the parameter. In a PUCCH transmission with SR, the UE can be provided with priority index 0 or 1 by phy PriorityIndex in the SchedulingRequestResourceConfig, and if the UE is not provided with any priority index for SR, the priority index is 0. In a PUSCH transmission with a semi-persistent CSI report, when the UE is provided with a priority index field in DCI format for activating the semi-persistent CSI report, the UE determines the priority index from the field. When the priority index is not provided to the UE in a transmission of a PUSCH or a PUCCH other than a PUCCH with the SL HARQ-ACK report, the priority index is 0.

(Analysis)

In this priority order, it is under study that, when a priority of a PRACH on a cell (in other word, SCell) other than a PCell is higher than a priority of a semi-persistent/periodic SRS, the priority is changed. The priority order after the change is as follows.

- PRACH transmission on the PCell.
- Transmission of PUCCH or PUSCH with a higher priority index according to a UE procedure for reporting control information.
- Transmission of PUCCH or PUSCH with the same priority index.

  -- PUCCH transmission with HARQ-ACK information/SR/link recovery request (LRR) or PUSCH transmission with HARQ-ACK information.
  -- PUCCH transmission with CSI or PUSCH transmission with CSI.
  -- PUSCH transmission without HARQ-ACK information or CSI and PUSCH transmission on PCell in a type-2 RA procedure.

- Aperiodic SRS transmission or PRACH transmission on a serving cell other than the PCell.
- Semi-persistent/periodic SRS transmission.

With this new priority rule, there are problems related to some non-backward compatibility (NBC) described below.

- NBC #1: The UE may follow the new priority rule (assuming an SCell PRACH is prioritized over SP/P-SRS), and the base station does not know such new priority rule (possibly prioritizing SP/P-SRS over SCell PRACH).
- NBC #2: The base station may follow the new priority rule (assuming an SCell PRACH is prioritized over SP/P-SRS), and the UE does not know such new priority rule (possibly prioritizing SP/P-SRS over SCell PRACH).

When the UE does not know the new priority rule and the base station does not know the new priority rule either, no problem occurs. When the UE follows the new priority rule and the base station also follows the new priority rule, no problem occurs.

Thus, unless problems of non-backward compatibility are sufficiently studied, communication quality degradation or throughput reduction may be caused.

Hence, the inventors of the present invention came up with the idea of operation related to a priority rule of uplink transmission.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A or B" may be interchangeably interpreted. In the present disclosure, "A/B/C" may mean "at least one of A, B, or C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an RRC parameter, an RRC configuration, an RRC information element (IE), and a higher layer parameter may be interchangeably interpreted.

In the present disclosure, the following abbreviations may be used.

- special cell: SpCell
- primary cell: PCell
- primary secondary cell: PSCell
- secondary cell: SCell
- radio network temporary identifier: RNTI
- time division multiplexing: TDM
- time-division-multiplexed: TDMed
- frequency division multiplexing: FDM
- frequency-division multiplexed: FDMed

In the present disclosure, $a_b$, a_b, and the expression obtained by adding b to the lower right of a may be interchangeably interpreted. In the present disclosure, $a^c$, a^c, and the expression obtained by adding c to the upper right of a may be interchangeably interpreted. In the present disclosure, $a_b^c$, a_b^c, and the expression obtained by adding b and c to the lower right and upper right of a, respectively, may be interchangeably interpreted. In the present disclosure, ceil(x) and a ceiling function may be interchangeably interpreted. In the present disclosure, floor(x) and a floor function may be interchangeably interpreted.

In the present disclosure, an SpCell, a PCell, and a PSCell may be interchangeably interpreted.

In the present disclosure, a reference signal (RS), a downlink reference signal (DL-RS), and an SSB/CSI-RS may be interchangeably interpreted. In the present disclosure, RSRP and SS-RSRP/CSI-RSRP may be interchangeably interpreted. In the present disclosure, an RS with RSRP, an RS corresponding to RSRP, an RS used to measure RSRP, an SSB with SS-RSRP, and a CSI-RS with CSI-RSRP may be interchangeably interpreted.

In the present disclosure, a beam, an SSB, an SSB index, a CSI-RS, a CSI-RS resource, a CSI-RS resource index, an RS, QCL assumption, a TCI state, a unified TCI state, a DL or joint TCI state, a UL TCI state, a UL Tx spatial filter, a spatial domain filter, a spatial domain transmission filter, a spatial domain reception filter, an antenna port QCL parameter, a QCL parameter, a Tx beam, and a spatial filter may be interchangeably interpreted.

In the present disclosure, a RACH resource, an RA resource, a PRACH preamble, an occasion, a RACH occasion (RO), a PRACH occasion, a repetition resource, a repetition configuration resource, a resource configured for an RO/repetition, a time instance and a frequency instance, a time resource and a frequency resource, an RO/preamble resource, a repetition, a PRACH resource, a time/frequency resource for PRACH, a preamble configuration/index, a mask configuration/index, and a PRACH configuration may be interchangeably interpreted.

In the present disclosure, a time occasion, a time domain location, a time location, a PRACH occasion, a PRACH slot, a period, a periodicity, a symbol/slot/subframe/frame, an index of at least one of these, a time domain index, and T# may be interchangeably interpreted. In the present disclosure, a frequency domain location, a frequency location, a subcarrier/RE/RB/CC, an index of at least one of these, a frequency domain index, and F# may be interchangeably interpreted. In the present disclosure, an RO, an RO index, and RO# may be interchangeably interpreted.

In the present disclosure, the number of PRACH transmissions, the number of repetitions, a repetition factor, an aggregation factor, and K may be interchangeably interpreted. In the present disclosure, multiple PRACH transmissions, the number of PRACH transmissions being greater than 1, and a plurality of repetitions of a PRACH may be interchangeably interpreted. In the present disclosure, single PRACH transmission and the number of PRACH transmissions being 1 may be interchangeably interpreted.

In the present disclosure, multiple PRACH transmissions, multiple PRACH transmissions using the same Tx beam, multiple PRACH transmissions using a plurality of different Tx beams, and multiple PRACH transmissions including multiple PRACH transmissions using the same Tx beam and multiple PRACH transmissions using a plurality of different Tx beams may be interchangeably interpreted.

In the present disclosure, a single PRACH transmission, an existing PRACH transmission, and an existing PRACH resource configuration may be interchangeably interpreted.

In the present disclosure, multiple PRACH transmissions, new PRACH transmissions, and multiple PRACH resource configurations may be interchangeably interpreted. In the present disclosure, a separate RO, a new RO, an additional RO, an RO for multiple PRACH transmissions, and an RO separated from an RO for existing PRACH transmission may be interchangeably interpreted.

In the present disclosure, an existing RO may include an RO configured/determined by RACH-ConfigCommon/RACH-ConfigGeneric/RACH-ConfigDedicated/AdditionalRACH-Config-r17/additionalRACH-ConfigList-r17.

In the present disclosure, determination of the number of PRACH transmissions may include determination of whether to perform a single PRACH transmission or multiple PRACH transmissions. The number of PRACH transmissions may include 1 (single PRACH transmission).

In the present disclosure, multiple actual PRACH transmissions may mean that an actual number of PRACH transmissions is greater than 1 after a possibility of dropping/cancellation of PRACH transmission is considered due to at least one of a collision defined in an existing specification or another collision (for example, a collision in Embodiment A1/A2).

In the present disclosure, multiple nominal PRACH transmissions may mean that the determined number of PRACH transmissions is greater than 1.

(Radio Communication Method)

The UE may receive capability information. When the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, the UE may perform the function.

Each embodiment may be applied to Rel. 16, may be applied to Rel. 17, may be applied to Rel. 18, or may be applied to later versions thereof.

<Embodiment 1>

A new UE capability may be introduced to report that the UE supports prioritizing an SCell PRACH transmission over an SP/P-SRS transmission in power allocation priority. Prioritizing an SCell PRACH transmission over an SP/P-SRS transmission in power allocation priority may be referred to as a new priority rule. According to this embodiment, the base station can know whether or not the UE supports the new priority rule. The new priority rule may follow at least one of the some options below.

- Option 1: A cell in which an SP/P-SRS in the new priority rule is transmitted may be at least one of some options below.

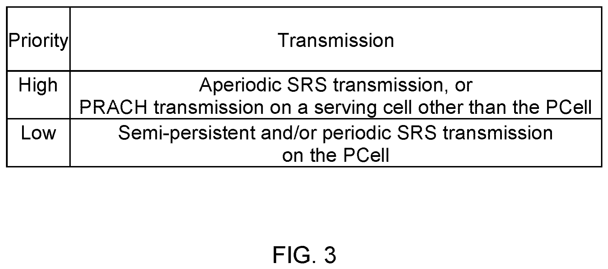

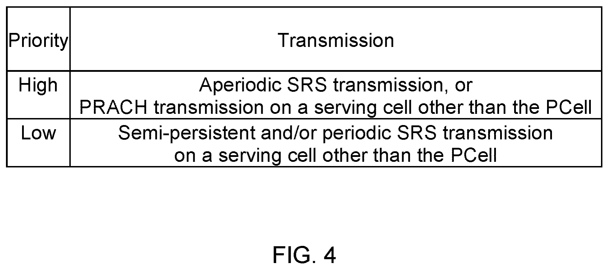

  -- Option 1-1: PCell (PSCell, SpCell). In the power allocation of the example of FIG. 3, an A-SRS transmission or a PRACH transmission on a serving cell other than the PCell is prioritized over an SP/P-SRS transmission on the PCell.
  -- Option 1-2: SCell (serving cell other than PCell). In the power allocation of the example of FIG. 4, an A-SRS transmission or a PRACH transmission on a serving cell other than the PCell is prioritized over an SP/P-SRS transmission on a serving cell other than the PCell.

- Option 2: Granularity of the UE capability may be at least one of some options below. The UE capability may be reported for each granularity.

  -- Option 2-1: per UE.
  -- Option 2-2: per FR.
  -- Option 2-3: per band.
  -- Option 2-4: per band combination.
  -- Option 2-5: per frequency set per cell (FSPC).

<Embodiment 2>

A new RRC parameter may be introduced to configure that the UE prioritizes an SCell PRACH transmission over an SP/P-SRS transmission in power allocation priority (new priority rule). According to this embodiment, the UE can recognize whether or not the UE can use the new priority rule. The new priority rule may follow at least one of the some options below.

- Option 1: A cell in which an SP/P-SRS in the new priority rule is transmitted may be at least one of some options below.

  -- Option 1-1: PCell (PSCell/SpCell).
  -- Option 1-2: per SCell.

- Option 2: The RRC parameter may be configured in a parameter indicated by at least one of some options below.

  -- Option 2-1: Common serving cell configuration (ServingCellConfigCommon).
  -- Option 2-2: Serving cell configuration (ServingCellConfig).
  -- Option 2-3: Common RACH configuration (RACH-ConfigCommon).
  -- Option 2-4: Generic RACH configuration (RACH-ConfigGeneric).
  -- Option 2-5: Dedicated RACH configuration (RACH-ConfigDedicated).

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied to at least one of some random accesses (RAs) below, or may be limited to only at least one of some RAs below.

- CBRA
- CFRA
- PDCCH-ordered RA
- RA for system information acquisition (SI acquisition)

At least one of the above-described embodiments may be applied only to a UE that has reported a specific UE capability or that supports the specific UE capability.

The specific UE capability may indicate at least one of the following:

- supporting of specific processing/operation/control/information for at least one of the embodiments above.
- supporting of a separate RO for a plurality of PRACH transmissions.
- supporting of a configuration of a separate RO for a plurality of PRACH transmissions based on an existing PRACH configuration.
- supporting of a set of RSRP thresholds for determination of the number of PRACH transmissions based on an existing PRACH configuration.
- supporting of separate target preamble received power for a plurality of PRACH transmissions based on an existing PRACH configuration.
- supporting of a parameter of a target preamble received power for a plurality of PRACH transmissions based on an existing PRACH configuration.
- supporting of a power reduction offset for a plurality of PRACH transmissions based on an existing PRACH configuration.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of operation related to at least one of the above-described embodiments, any RRC parameter for a specific release (for example, Rel. 18/19), or the like.

An RRC parameter for enabling operation XXX in Rel. YY (for example, YY is 18 or greater) may be represented as XXX_rYY (XXX-rYY).

When the UE does not support at least one of the specific UE capabilities above or is not configured with the specific information, operation of Rel. 15/16 may be applied, for example.

(Supplementary Note)

Regarding one embodiment of the present disclosure, the following supplementary notes of the invention will be given.

{Supplementary Note 1}

A terminal including:

a transmitting section that transmits capability information; and
a control section that, when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, performs the function.

{Supplementary Note 2}

The terminal according to supplementary note 1, wherein when the capability information indicates the function and a configuration related to the function is received, the control section performs the function.

{Supplementary Note 3}

The terminal according to supplementary note 1 or 2, wherein the semi-persistent SRS transmission and the periodic SRS transmission are transmitted on the primary cell.

{Supplementary Note 4}

The terminal according to any one of supplementary notes 1 to 3, wherein the semi-persistent SRS transmission and the periodic SRS transmission are transmitted on a secondary cell.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

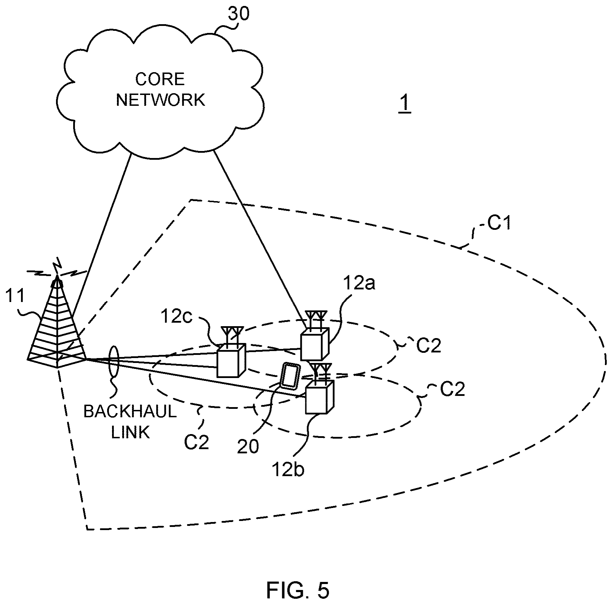

FIG. 5 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR), and so on, whose specifications have been drafted by the Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).
The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.
The user terminal 20 may be connected to at least one of the plurality of base stations 10. The user terminal 20 may use at least one of carrier aggregation (CA) and dual connectivity (DC) using a plurality of component carriers (CCs).
Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the

DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

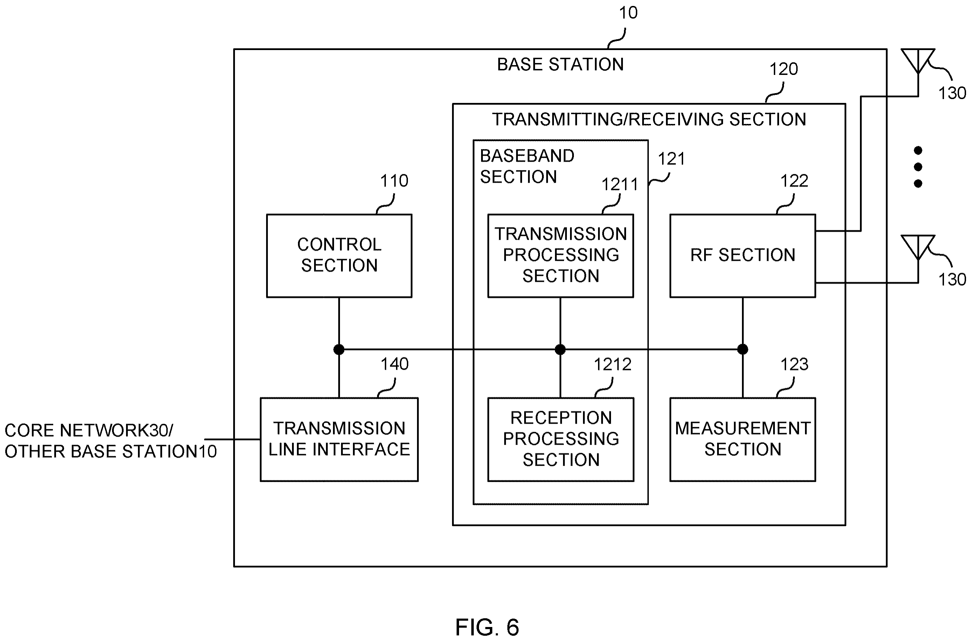

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive capability information. When the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, the control section 110 may control a transmission of a configuration of the function.

(User Terminal)

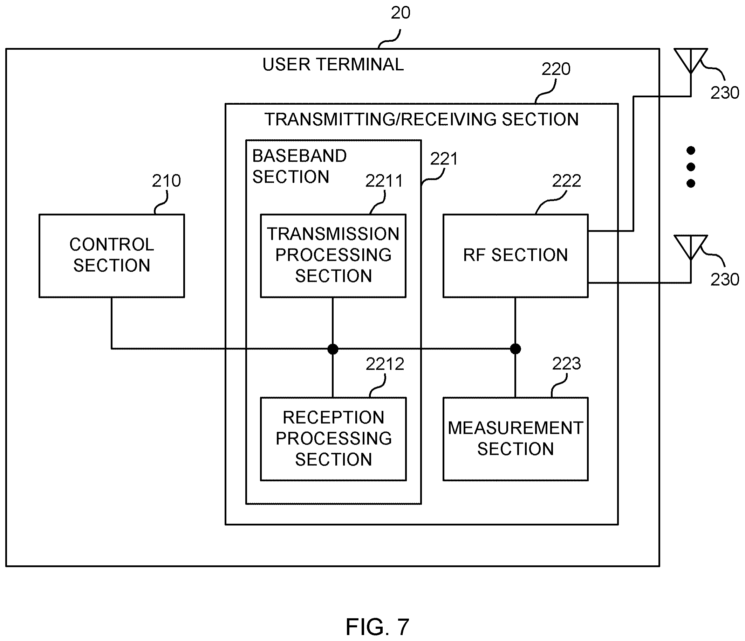

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interpreted as a zero power (ZP) CSI-RS, and vice versa. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive capability information. When the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, the control section 210 may perform the function.

When the capability information indicates the function and a configuration related to the function is received, the control section 210 may perform the function.

The semi-persistent SRS transmission and the periodic SRS transmission may be transmitted on the primary cell.

The semi-persistent SRS transmission and the periodic SRS transmission may be transmitted on a secondary cell.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

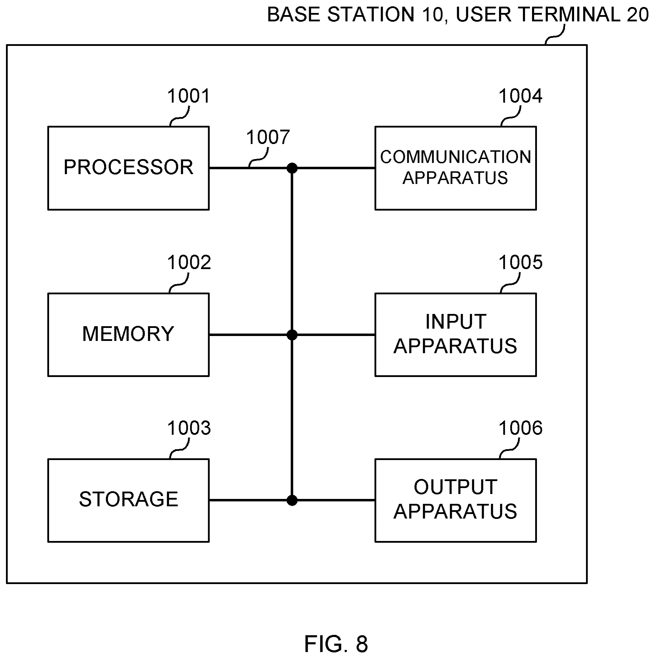

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

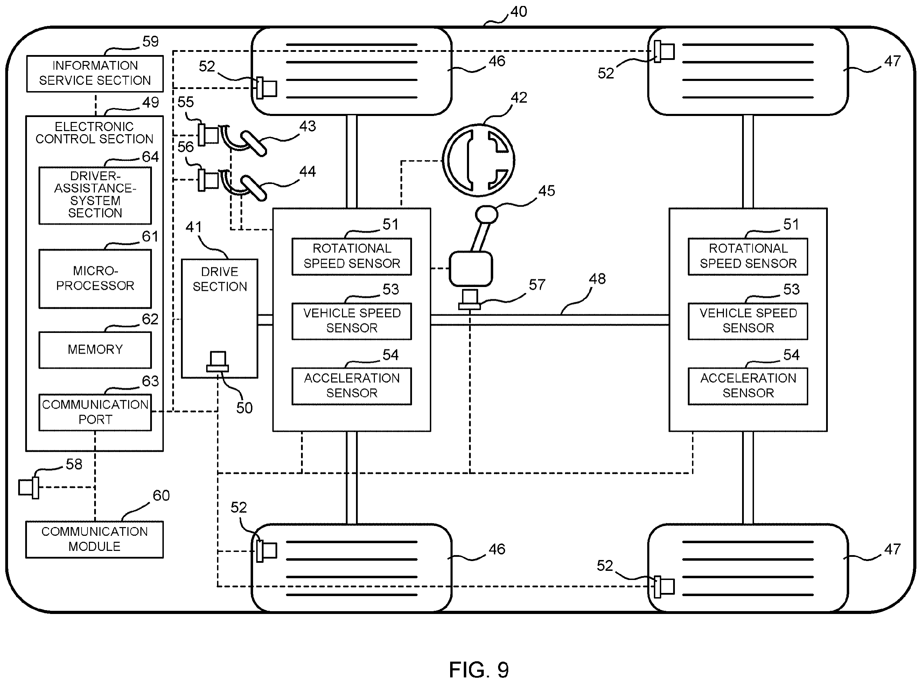

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-70552, filed on April 24, 2023, the contents of which are incorporated herein by reference in their entirety.

**Claims**

1. A terminal comprising:

   a transmitting section that transmits capability information; and
   a control section that, when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, performs the function.

2. The terminal according to claim 1, wherein
   when the capability information indicates the function and a configuration related to the function is received, the control section performs the function.

3. The terminal according to claim 1, wherein
   the semi-persistent SRS transmission and the periodic SRS transmission are transmitted on the primary cell.

4. The terminal according to claim 1, wherein
   the semi-persistent SRS transmission and the periodic SRS transmission are transmitted on a secondary cell.

5. A radio communication method for a terminal, the radio communication method comprising:

   transmitting capability information; and
   when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, performing the function.

6. A base station comprising:

   a receiving section that receives capability information; and
   a control section that, when the capability information indicates a function of prioritizing a random access channel transmission on a serving cell other than a primary cell over a semi-persistent sounding reference signal (SRS) transmission and a periodic SRS transmission in power allocation to any of two uplink carriers of one cell and a plurality of cells in carrier aggregation, controls a transmission of a configuration of the function.

```
RACH-ConfigCommon ::=                          SEQUENCE {
    rach-ConfigGeneric                                RACH-ConfigGeneric,
    totalNumberOfRA-Preambles                         INTEGER (1..63)     OPTIONAL,    -- Need S
    ssb-perRACH-OccasionAndCB-PreamblesPerSSB     CHOICE {
        oneEighth      ENUMERATED {n4,n8,n12,n16,n20,n24,n28,n32,n36,n40,n44,n48,n52,n56,n60,n64},
    //oneEighth corresponds to one SSB associated with 8 RACH occasions;
        n4 corresponds to 4 Contention Based preambles per SSB
        oneFourth      ENUMERATED {n4,n8,n12,n16,n20,n24,n28,n32,n36,n40,n44,n48,n52,n56,n60,n64},
        oneHalf                                       ENUMERATED
{n4,n8,n12,n16,n20,n24,n28,n32,n36,n40,n44,n48,n52,n56,n60,n64},
        one                                           ENUMERATED
{n4,n8,n12,n16,n20,n24,n28,n32,n36,n40,n44,n48,n52,n56,n60,n64},
        two                                           ENUMERATED {n4,n8,n12,n16,n20,n24,n28,n32},
        four                                          INTEGER (1..16),
        eight                                         INTEGER (1..8),
        sixteen                                       INTEGER (1..4)
    }
...
}


RACH-ConfigGeneric ::=                         SEQUENCE {
    prach-ConfigurationIndex              INTEGER (0..255),
    msg1-FDM                              ENUMERATED {one, two, four, eight},
    msg1-FrequencyStart                   INTEGER (0..maxNrofPhysicalResourceBlocks-1),
    zeroCorrelationZoneConfig             INTEGER(0..15),
    preambleReceivedTargetPower           INTEGER (-202..-60),
    preambleTransMax                      ENUMERATED {n3, n4, n5, n6, n7, n8, n10, n20, n50, n100, n200},
    powerRampingStep                      ENUMERATED {dB0, dB2, dB4, dB6},
    ra-ResponseWindow                     ENUMERATED {sl1, sl2, sl4, sl8, sl10, sl20, sl40, sl80},
    ...,
}
```

EP 4 704 473 A1

FIG. 1

EP 4 704 473 A1

## FIG. 2A

FREQUENCY

| SSB#1 | SSB#3 | | SSB#63 | — RO |
| SSB#1 | SSB#3 | ... | SSB#63 | |
| SSB#0 | SSB#2 | | SSB#62 | |
| SSB#0 | SSB#2 | | SSB#62 | |

preamble index for SSB#0: 0-15

TIME

## FIG. 2B

FREQUENCY

| SSB#12-15 | SSB#28-31 | | SSB#60-63 | — RO |
| SSB#8-11 | SSB#24-27 | ... | SSB#56-59 | |
| SSB#4-7 | SSB#20-23 | | SSB#52-55 | |
| SSB#0-3 | SSB#16-19 | | SSB#48-51 | |

preamble index for SSB#0: 0-15
preamble index for SSB#1: 16-31
preamble index for SSB#2: 32-47
preamble index for SSB#3: 48-63

TIME

| Priority | Transmission |
|----------|--------------|
| High | Aperiodic SRS transmission, or<br>PRACH transmission on a serving cell other than the PCell |
| Low | Semi-persistent and/or periodic SRS transmission<br>on the PCell |

FIG. 3

| Priority | Transmission |
|---|---|
| High | Aperiodic SRS transmission, or<br>PRACH transmission on a serving cell other than the PCell |
| Low | Semi-persistent and/or periodic SRS transmission<br>on a serving cell other than the PCell |

FIG. 4

FIG. 5

FIG. 6

EP 4 704 473 A1

FIG. 7

EP 4 704 473 A1

BASE STATION 10, USER TERMINAL 20

FIG. 8

FIG. 9

## INTERNATIONAL SEARCH REPORT

| International application No. |
|---|
| **PCT/JP2024/015807** |

**A. CLASSIFICATION OF SUBJECT MATTER**

*H04W 52/32*(2009.01)i; *H04W 8/22*(2009.01)i; *H04W 52/38*(2009.01)i; *H04W 72/0457*(2023.01)i
FI: H04W52/32; H04W8/22; H04W52/38; H04W72/0457 110

According to International Patent Classification (IPC) or to both national classification and IPC

**B. FIELDS SEARCHED**

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

3GPP TSG RAN WG1-4, SA WG1-4, CT WG1,4

**C. DOCUMENTS CONSIDERED TO BE RELEVANT**

| Category* | Citation of document, with indication, where appropriate, of the relevant passages | Relevant to claim No. |
|---|---|---|
| Y | ERICSSON, Power scaling of SCell PRACH for UL CA [online], 3GPP TSG RAN WG1 #112b-e R1-2303755, 07 April 2023, [retrieved on 13 June 2024], Internet: <URL: https://www.3gpp.org/ftp/tsg_ran/WG1_RL1/TSGR1_112b-e/Docs/R1-2303755.zip> p. 2, lines 15-36 | 1-6 |
| Y | WO 2021/206382 A1 (LG ELECTRONICS INC.) 14 October 2021 (2021-10-14) paragraphs [371]-[376] | 1-6 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/015807**

| Patent document cited in search report | Publication date (day/month/year) | Patent family member(s) | Publication date (day/month/year) |
|---|---|---|---|
| WO 2021/206382 A1 | 14 October 2021 | JP 2023-521688 A paragraphs [0361]-[0365] US 2023/0147579 A1 EP 4135248 A1 KR 10-2022-0146504 A CN 115428379 A | |

Form PCT/ISA/210 (patent family annex) (July 2022)

**REFERENCES CITED IN THE DESCRIPTION**

**Patent documents cited in the description**

* JP 2023070552 A